Europäisches Patentamt

(19) European Patent Office

Office européen des brevets

(11) Veröffentlichungsnummer: **0 045 028**
**B1**

(12) # EUROPÄISCHE PATENTSCHRIFT

(45) Veröffentlichungstag der Patentschrift:
**11.09.85**

(51) Int. Cl.⁴: **H 01 F 1/11, C 01 G 49/02**

(21) Anmeldenummer: **81105676.1**

(22) Anmeldetag: **20.07.81**

(54) **Verfahren zur Herstellung magnetischer Eisenoxide.**

(30) Priorität: **29.07.80 DE 3028679**

(43) Veröffentlichungstag der Anmeldung:
**03.02.82 Patentblatt 82/5**

(45) Bekanntmachung des Hinweises auf die Patenterteilung:
**11.09.85 Patentblatt 85/37**

(84) Benannte Vertragsstaaten:
**DE FR GB IT**

(56) Entgegenhaltungen:
**DE - B - 1 176 111**
**DE - C - 1 061 760**
**GB - A - 1 060 767**
**GB - A - 1 221 434**
**US - A - 4 153 472**

(73) Patentinhaber: **BAYER AG, Konzernverwaltung RP Patentabteilung, D-5090 Leverkusen 1 Bayerwerk (DE)**

(72) Erfinder: **Brunn, Horst, Dr., Oderstrasse 55, D-4150 Krefeld (DE)**
Erfinder: **Kiemle, Peter, Dr., Franz-Stollwerck-Strasse 22, D-4150 Krefeld (DE)**
Erfinder: **Hund, Franz, Dr., Scheiblerstrasse 89, D-4150 Krefeld (DE)**
Erfinder: **Bade, Herlbert, Dr., Grüner Dyk 144, D-4150 Krefeld (DE)**

## Beschreibung

Die vorliegende Erfindung betrifft ein Verfahren zur Herstellung nadelförmiger magnetischer Eisenpigmente nach dem Nitrobenzolverfahren mit nadelförmigen $\alpha$-FeOOH-Pigmenten, die durch Oxidation von Eisen mit Nitrobenzol hergestellt werden sowie deren Verwendung.

Es sind bereits seit langem Verfahren bekannt, die die Herstellung von nadelförmigen magnetischen Eisenoxiden, ausgehend von nadelförmigem $\alpha$-FeOOH, beschreiben (US-PS 2 694 656). Dabei wird das Ausgangsprodukt $\alpha$-FeOOH in wäßriger Eisen-(II)-Salzlösung mit separat hergestellten $\alpha$-FeOOH-Keimen durch Luftoxidation entweder von gefälltem Eisen-(II)-Hydroxid (Fällungsverfahren) oder von metallischem Eisen (Pennimanverfahren) hergestellt (DE-OS 1 592 398, DE-AS 1 242 199, DE-PS 1 176 111). Die Nachteile dieser Verfahren sind die beim Fällungsverfahren entstehenden Salze sowie die geringe Raum/Zeit-Ausbeute beim Pennimanverfahren.

Verfahren zur Herstellung von als Farbpigmente geeigneten Eisenoxiden oder -oxidhydroxiden durch Oxidation von Eisen mit Nitroaromaten, speziell Nitrobenzol, in sauren Elektrolytlösungen (im folgenden als »Nitrobenzolverfahren« bezeichnet) sind sehr wirtschaftlich. Bei bisher technisch angewandten Varianten des Nitrobenzolverfahrens zur Herstellung von $\alpha$-FeOOH werden zur Steuerung der gewünschten Phase und ihrer Pigmenteigenschaften Zusätze von AlCl$_3$ (DE-PS 515 758), hydrolysierbaren 3- und 4wertigen Metallsalzen (DE-PS 516 999) sowie von AlCl$_3$ und Zinnsalzen (DE-PS 703 416) verwendet.

Die nach den bisherigen Ausführungsformen des Nitrobenzolverfahrens hergestellten $\alpha$-FeOOH-Pigmente sind als Ausgangsmaterialien zur Herstellung magnetischer Eisenoxide jedoch wenig geeignet.

Durch die beschriebenen Fremdionen-Zusatzelektrolyte werden die Magnetwerte der aus dem $\alpha$-FeOOH hergestellten nadelförmigen magnetischen Eisenoxide erheblich beeinträchtigt, da die zugesetzten Fremdmetallionen in das Gitter des $\alpha$-FeOOH eingebaut werden und auch nach der Konvertierung neben den den Magnetismus bedingenden Eisenionen im oxidischen Magnetpigment noch als magnetische Verdünnung enthalten sind.

Bei den bisher bekannten Verfahren ist es nicht möglich, steuernd bei der Keimbildung einzugreifen. Zur Erzielung optimaler und variierbarer magnetischer Eigenschaften der Magnetpigmente ist es jedoch notwendig, nach Teilchenform und Teilchengröße definierte $\alpha$-FeOOH-Ausgangsprodukte herzustellen. Dies ist unter anderem durch den Einsatz von Keimen bei der Pigmentbildung möglich. $\alpha$-FeOOH-Pigmente für den Anwendungsbereich magnetischer Speichermaterialien mit Low-Noise-Eigenschaften bzw. für verbesserte Computerbänder liegen im Kristallitgrößenbereich zwischen 26 und 31 nm.

Ziel der Erfindung ist es daher, ein Verfahren zu entwickeln, das es gestattet, wirtschaftlich nach dem Nitrobenzolverfahren nadelförmige $\alpha$-FeOOH-Pigmente mit Kristallitgrößen von 26 bis 31 nm mit genau definierten Eigenschaften herzustellen, die sich in nadelförmige magnetischen Eisenoxide (Fe$_3$O$_4$, $\gamma$-Fe$_2$O$_3$ bzw. Fe$_3$O$_4$-$\gamma$-Fe$_2$O$_3$-Mischphasen) konvertieren lassen.

Überraschenderweise wurde nun gefunden, daß bei Anwesenheit von Eisen und Nitrobenzol in der Vorlage während der Fe(OH)$_2$-Fällung aus Eisen-(II)-Salz durch Alkalihydroxide oder -carbonate die Bildung so feinteiliger $\alpha$-FeOOH-Keime erreicht werden kann, daß beim anschließenden Pigmentwachstum wirtschaftlich $\alpha$-FeOOH-Pigmente im Kristallitgrößenbereich bis 36 nm, bevorzugt 26 bis 31 nm, entstehen. Dadurch ist es möglich, bei guter Raum/Zeit-Ausbeute entsprechend feinteilige $\alpha$-FeOOH-Pigmente herzustellen. Natürlich kann durch vermehrte Zugabe der Reaktanten Nitroaromat und Eisen die Kristallitgröße beliebig vergrößert werden.

Die vorliegende Erfindung betrifft demnach ein Verfahren zur Herstellung nadelförmiger magnetischer Eisenoxidpigmente nach dem Nitrobenzolverfahren durch Oxidation von Eisen mit Nitroaromaten, speziell Nitrobenzol, in sauren Elektrolytlösungen mit nadelförmigen $\alpha$-FeOOH-Keimen, sich anschließender Entwässerung, Reduktion sowie gegebenenfalls Oxidation, wobei die $\alpha$-FeOOH-Keime in einer Suspension von metallischem Eisen, Eisen-(II)-Salzen und Nitroaromaten durch Zugabe von 10—95% der zur vollständigen Fällung der Eisen-(II)-Salze an basischen Fällungsmitteln bei Temperaturen von 0—90° C gebildet werden.

Als metallisches Eisen können dabei unreine Gußeisenspäne eingesetzt werden, ohne daß dadurch die Qualität der erhaltenen Teilchen beeinträchtigt wird. Als besonders bevorzugter Nitroaromat erweist sich Nitrobenzol.

Zu einer wäßrigen Fe-(II)-Salzlösung wird ein Teil des für den Gesamtumsatz benötigten Gußeisens sowie 5 bis 50% des für den Gesamtumsatz erforderlichen Nitrobenzols hinzugefügt. Aus diesem Reaktionsgemisch wird unter intensivem Rühren mit so viel basischem Fällungsmittel Eisen-(II)-Hydroxid bzw. basisches Eisen-(II)-Salz ausgefällt, daß die Ausfällung dem 0,10- bis 0,95fachen des vorgegebenen Eisen-(II)-Salzes entspricht.

Besonders gute Ergebnisse werden mit einem Ausfällgrad von 20—80% erreicht.

Als basische Fällungsmittel sind besonders Ammoniak und/oder basische Alkali-, Erdalkali- und/oder Ammoniumsalze geeignet.

Die Temperatur wird bei dieser Reaktion im Bereich von 0 bis 90°C, besonders bevorzugt 10 bis 60°C, eingestellt und die Reaktionsmischung 0,3 bis 2 Stunden gerührt. Anschließend wird innerhalb

2

15 Minuten bis 2 Stunden auf 90 bis 98°C aufgeheizt und 15 Minuten bis 2 Stunden nachgerührt. Die Keimbildung ist dann beendet. Nach Zugabe von weiterer Fe-(II)-Salzlösung wird die vorgelegte feinteilige Keimsuspension bei 90 bis 100°C über 1 bis 10 Stunden mit dem Resteisen und dem Rest weiterer aromatischer Nitroverbindung versetzt. Die zugesetzte Gesamtmenge an Eisen und an aromatischer Nitroverbindung richtet sich nach der Keimkristallitgröße und der gewünschten Endkristallitgröße des nadelförmigen $\alpha$-FeOOH-Pigmentes. Dabei ist der etwa bei der Keimbildung eingesetzte Überschuß an aromatischer Nitroverbindung und die dort vorgelegte Eisenmenge zu berücksichtigen. Die Umsetzung erfolgt bei 90 bis 100°C und die Reaktionsmischung wird bei diesen Temperaturen 2 bis 20 Stunden gerührt. Die gebildete aromatische Aminoverbindung wird durch Wasserdampfdestillation abgetrennt und das Pigment anschließend gewaschen, filtriert und getrocknet.

Als Eisen-(II)-Salze können Eisen-(II)-sulfat (50 bis 500 g/l), -chlorid, ein anderes lösliches Eisen-(II)-Salz oder Gemische verschiedener löslicher Fe-(II)-Salze eingesetzt werden. Als basisches Fällungsmittel sind Alkali- bzw. Erdalkalihydroxide und/oder -carbonate, Ammoniak oder organische Aminoverbindungen geeignet. Bevorzugt wird Natronlauge verwendet. Die aromatische Nitroverbindung ist bevorzugt Nitrobenzol. Im Gegensatz zu den bisher bekannten Verfahren, die im wesentlichen mit Eisen-(II)- oder Aluminiumchlorid arbeiten, kann bei dem erfindungsgemäßen Verfahren auch von Eisen-(II)-sulfat ausgegangen werden. Darüber hinaus kann bei dem hier beschriebenen Verfahren billiges, unreines und reaktionsaktives, sogenanntes Gußeisen, eingesetzt werden, ohne daß dadurch die Nadelform der Teilchen beeinträchtigt wird. Bei den früher beschriebenen Verfahren war zur Herstellung nadelförmiger Teilchen reaktionsträges teures Reineisen notwendig.

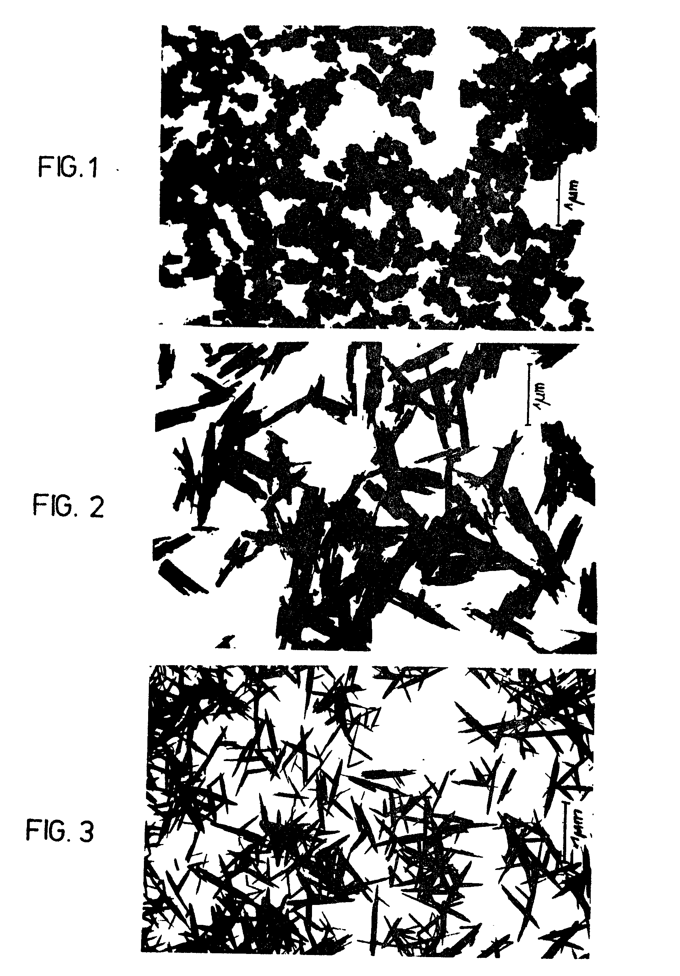

Fig. 1 zeigt die elektronenmikroskopische Aufnahme eines $\alpha$-FeOOH-Pigmentes, das nach einem bekannten Verfahren unter Einsatz von $AlCl_3$ und unreinem reaktionsaktivem Gußeisen hergestellt wurde. Die Nadel- bzw. Prismenform der Teilchen ist wenig ausgeprägt. In Fig. 2 erkennt man die gegen Fig. 1 wesentlich bessere Prismenform bei der Herstellung eines $\alpha$-FeOOH-Pigments nach dem gleichen Verfahren, d. h. unter Verwendung von $AlCl_3$, allerdings unter Verwendung von reinem reaktionsträgen teuren Eisen. Fig. 3 zeigt im Gegensatz dazu ein nach dem erfindungsgemäßen Verfahren ohne Fremdionen-Zusätze mit unreinem billigem Gußeisen hergestelltes $\alpha$-FeOOH-Pigment. Die stark ausgeprägten Nadeln von kleiner Teilchengröße sind deutlich zu erkennen.

Die nach dem beschriebenen neuen Verfahren gewonnenen stark nadelförmigen $\alpha$-FeOOH-Pigmente werden in an sich bekannter Weise unter Beibehaltung der Nadelform (Pseudomorphose) durch Erhitzen auf Temperaturen über 200°C zu $\alpha$-Fe_2O_3$ dehydratisiert, mit wasserdampfhaltigem Wasserstoff zu $Fe_3O_4$ bei Temperaturen über 300°C reduziert und gegebenenfalls anschließend zu $Fe_3O_4$-$\gamma$-$Fe_2O_3$-Mischphasen- oder zum $\gamma$-$Fe_2O_3$-Magnetpigment unter etwa 300°C reoxidiert.

Diese Pigmente können für die Herstellung von magnetischen Aufzeichnungsträgern verwendet werden.

Nachfolgend wird das erfindungsgemäße Verfahren beispielhaft erläutert.


Beispiel 1

In einem 90-l-Reaktionsgefäß mit Rückflußkühler, Rührer und Einrichtungen zur Temperaturregelung und pH-Messung werden 10,21 l $FeSO_4$ (240 g/l), 1,021 l $FeCl_2$ (360 g/l), 1,21 kg Gußeisen und 1,361 l Nitrobenzol vorgelegt, auf 30°C temperiert und unter Rühren in 10 Minuten mit 5,433 l (190 g/l) NaOH versetzt, in 60 Minuten auf 90°C aufgeheizt und anschließend 15 Minuten nachgerührt. Die Keimbildung ist damit beendet.

Anschließend wird die Suspension schnell mit 1,0 l $FeCl_2$ (360 g/l) versetzt und auf 98°C aufgeheizt. Sodann werden im zeitlichen Abstand von 10 Minuten je 447 g Gußeisenschrott insgesamt 9mal zugegeben sowie im Verlaufe von 2 Stunden 3,489 l Nitrobenzol zugefügt. 30 Minuten nach beendeter Nitrobenzolzugabe werden insgesamt 5mal im Abstand von 30 Minuten jeweils 500 ml Wasser zugesetzt. Die Gesamtlaufzeit beträgt 6 Stunden. Die Temperatur wird während der gesamten Reaktion auf 98°C gehalten. Das gebildete Anilin wird durch Wasserdampfdestillation abgetrennt, überschüssiges Eisen wird abgesiebt, das gelbe Pigment gewaschen, filtriert und bei 140°C getrocknet. Die nach der Röntgenmethode bestimmte Kristallitgröße des $\alpha$-FeOOH ist 28,5 nm.

3

Konvertierung zum $\gamma$-Fe$_2$O$_3$

Das gebildete nadelförmige $\alpha$-FeOOH wird im Muffelofen 60 Minuten bei 400°C dehydratisiert. Das dabei erhaltene nadelförmige $\alpha$-Fe$_2$O$_3$ wird in einem Wirbelbett 15 Minuten bei 460°C und 45 Minuten bei 520°C mit wasserdampfbeladenem Wasserstoff zu Fe$_3$O$_4$ reduziert und anschließend 45 Minuten bei 280°C mit Luft reoxidiert. Man erhält ein $\gamma$-Fe$_2$O$_3$-Magnetpigment mit folgenden Eigenschaften:

| | | |
|---|---|---|
| Koerzitivkraft (Pulver): | I H$_{C\,Pulver}$ | = 432 (Oe) |
| Koerzitivkraft (Band): | I H$_{C\,Band}$ | = 351 (Oe) |
| Remanenz: | Br/$\rho$ | = 466 (Gauss $\cdot$ cm$^3$ $\cdot$ g$^{-1}$) |
| Ausrichtbarkeit: | Br/$_{Bs}$ | = 0,89 |

Volumenfüllfaktor VF = 35,6% (bei der üblichen Bandeinarbeitung).

## Patentansprüche

1. Verfahren zur Herstellung nadelförmiger magnetischer Eisenoxidpigmente nach dem Nitrobenzolverfahren durch Oxidation von Eisen mit Nitroaromaten, speziell Nitrobenzol, in sauren Elektrolytlösungen mit nadelförmigen $\alpha$-FeOOH-Keimen, sich anschließender Entwässerung, Reduktion sowie gegebenenfalls Oxidation, dadurch gekennzeichnet, daß die $\alpha$-FeOOH-Keime in einer Suspension von metallischem Eisen, Eisen-(II)-Salzen und Nitrobenzol durch Zugabe von 10—95% der zur vollständigen Fällung der Eisen-(II)-Salze an basischen Fällungsmitteln bei Temperaturen von 0—90°C gebildet werden.

2. Verfahren gemäß Anspruch 1, dadurch gekennzeichnet, daß die Menge an basischen Fällungsmitteln 20—80% der zur vollständigen Fällung der Eisen-(II)-Salze beträgt.

3. Verfahren gemäß einem der Ansprüche 1 oder 2, dadurch gekennzeichnet, daß die Keimbildung bei Temperaturen von 10—60°C vorgenommen wird.

4. Verfahren gemäß einem der Ansprüche 1 bis 3, dadurch gekennzeichnet, daß als metallisches Eisen bevorzugt Gußeisen verwendet wird.

5. Verfahren gemäß einem der Ansprüche 1 bis 4, dadurch gekennzeichnet, daß als basische Fällungsmittel Ammoniak und/oder basisch reagierende Salze der Alkali-, der Erdalkalimetalle und/ oder des Ammoniums eingesetzt werden.

6. Verwendung der gemäß einem der Verfahren der Ansprüche 1 bis 5 hergestellten magnetischen Eisenoxidpigmente zur Herstellung von magnetischen Aufzeichnungsträgern.

## Claims

1. Process for the production of needle-shaped magnetic iron oxide pigments by the nitrobenzene process by the oxidation of iron with nitro aromatics, in particular nitrobenzene, in acid electrolyte solutions using needle-shaped $\alpha$-FeOOH nuclei, subsequent dehydration, reduction and optionally oxidation, characterised in that the $\alpha$-FeOOH nuclei are formed at temperatures of 0—90°C in a suspension of metallic iron, iron-(II) salts and nitrobenzene by adding 10—95% of the quantity of basic precipitants required for the complete precipitation of the iron-(II) salts.

2. Process according to Claim 1, characterised in that the quantity of basic precipitants is 20—80% of the quantity required for the complete precipitation of the iron-(II) salts.

3. Process according to one of Claims 1 or 2, characterised in that the nuclei formation is carried out at temperatures of 10—60°C.

4. Process according to one of Claims 1 to 3, characterised in that cast iron is preferably used at the metallic iron.

5. Process according to one of Claims 1 to 4, characterised in that ammonia and/or basically reacting salts of alkali metals, of alkaline earth metals and/or of ammonium are used as the basic precipitants.

6. Use of the magnetic iron oxide pigments produced according to one of the processes of Claims 1 to 5 for the production of magnetic recording supports.

## Revendications

1. Procédé de production de pigments aciculaires magnétiques à l'oxyde de fer selon le procédé au nitrobenzène, par oxydation de fer avec des composés aromatiques nitrés, notamment le nitrobenzène, dans des solutions électrolytiques acides avec des germes aciculaires d'$\alpha$-FeOOH, puis déshydratation, réduction et, le cas échéant, oxydation, caractérisé en ce que les germes d'$\alpha$-FeOOH sont formés à des températures de 0 à 90° C dans une suspension de fer métallique, de sels de fer-(II) et de nitrobenzène par addition de 10 à 95% de la quantité de précipitants basiques nécessaire pour précipiter totalement les sels de fer-(II).

2. Procédé suivant la revendication 1, caractérisé en ce que la quantité de précipitants basiques s'élève à 20—80% de la quantité permettant la précipitation totale des sels de fer-(II).

3. Procédé suivant les revendications 1 ou 2, caractérisé en ce que la formation de germes est effectuée à des températures de 10 à 60° C.

4. Procédé suivant l'une des revendications 1 à 3, caractérisé en ce qu'on utilise de préférence la fonte comme fer métallique.

5. Procédé suivant l'une des revendications 1 à 4, caractérisé en ce qu'on utilise comme précipitants basiques l'ammoniac et/ou des sels à réaction basique des métaux alcalins, des métaux alcalino-terreux et/ou d'ammonium.

6. Utilisation des pigments magnétiques à l'oxyde de fer produits selon l'un des procédés des revendications 1 à 5 pour la réalisation de supports magnétiques d'enregistrement.

FIG. 1

FIG. 2

FIG. 3